# FASCICULE DE BREVET EUROPEEN

(11) **EP 1 740 456 B1**
(45) Date de publication et mention de la délivrance du brevet: **26.03.2008**
(21) Numéro de dépôt: 05758188.6
(22) Date de dépôt: 19.04.2005
(51) Int. Cl.: B64D 29/06

(54) **GROUPE TURBOPROPULSEUR POUR AERONEF A INSTALLATION AERODYNAMIQUE AMELIOREE**
FLUGZEUGSTRAHLTRIEBWERK MIT VERBESSERTER AERODYNAMISCHER INSTALLATION
AIRCRAFT TURBINE ENGINE PROVIDED WITH AN IMPROVED AERODYNAMIC INSTALLATION

(30) Priorité: 27.04.2004 FR 0404445
(43) Date de publication de la demande: 10.01.2007
(73) Titulaire: Aircelle, 76700 Harfleur (FR)
(72) Inventeur: FOURNIER, Alain, F-92350 Le-Plessis-Robinson (FR); LABOURE, Bernard, F-78140 Vélizy (FR); STANDISH, Robert, F-92210 Saint-Cloud (FR)
(74) Mandataire: Sauvage, Renée
(86) Numéro de dépôt international: PCT/FR2005/000940
(87) Numéro de publication internationale: WO 2005/110845

(56) Documents cités:
- EP-A- 0 744 339
- EP-A- 1 174 341
- US-A- 5 203 525

## Description

La présente invention concerne, d'une manière générale, un groupe turbo-propulseur pour aéronef comprenant notamment, de l'amont à l'aval par référence au sens d'écoulement des gaz, un réacteur pourvu d'un carter de soufflante et un système d'éjection des gaz, coaxiaux à un axe moteur, ledit système d'éjection des gaz incluant deux demi-capotages d'arrière-corps, dits D-ducts, articulés chacun autour d'un axe, ce qui leur permet de passer, à des fins d'opérations de maintenance, d'une position fermée à une position ouverte.

En position fermée, lesdits demi-capotages d'arrière-corps viennent, en outre, se relier à l'extrémité aval du carter de soufflante via un moyen d'étanchéité et de transmission d'efforts, ayant des profils femelle et mâle complémentaires, dit "V-blade/V-groove" (lame en V/rainure en V), le profil mâle appartenant aux demi-capotages d'arrière-corps et le profil femelle appartenant au côté carter de soufflante.

Un groupe turbo-propulseur selon les préambules de la revendication 1 et 4 est connu du document EP-A-1 174 341. Le document EP-A-0 744 339 montre un demi-capotage d'une nacelle où l'angle α est compris entre 2° et 7°. Toutefois, il ne s'agit pas d'un demi-capotage d'arrière corps relié au carter de soufflante. De plus, l'angle β du plan de jonction n'est pas mentionné. Les axes d'articulation divergent en direction de l'aval. Le document US-A-5 203 525 montre deux demi-capotages agencés sur le moteur au moyen de deux axes d'articulation déplacées; lesdits axes étant apparemment parallèles à l'axe du moteur et l'un à l'autre.

Dans la technique connue, le plan de sortie aval du carter de soufflante est rigoureusement perpendiculaire à l'axe moteur et les axes d'articulation des demi-capotages sont parallèles entre eux et inclinés d'un angle α par rapport à l'axe moteur, angle qui ne peut excéder 2 à 3° car, au-delà, le système "V-blade/V-groove" aurait du mal à s'engager correctement en raison d'un effet "ciseau" et, en outre, le frottement accru résultant d'un tel engagement difficile aboutirait à une usure prématurée.

Cependant, il y aurait un intérêt à augmenter cet angle α pour réduire l'importance de la saillie qu'implique le carénage des charnières définissant les axes d'articulation des demi-capotages d'arrière-corps. Une telle saillie complique, en effet, la définition aérodynamique de la zone concernée.

La présente invention apporte une solution permettant une telle augmentation de l'angle α tout en conservant un fonctionnement correct du système "V-blade/V-groove".

Ainsi, selon l'invention, l'angle α que font les axes d'articulation avec l'axe moteur est supérieur à 3° et le plan de jonction entre les demi-capotages d'arrière-corps et l'extrémité aval du carter de soufflante fait, avec le plan perpendiculaire à l'axe moteur, un angle β tel que la différence entre l'angle α et l'angle β est inférieure ou égale à environ 3°.

On comprend que cela implique une modification de l'arrière du carter de soufflante du réacteur et de l'avant des demi-capotages d'arrière-corps portant respectivement les parties femelle et mâle du système "V-blade/V-groove", mais il en résulte une réduction significative de la saillie des charnières précitées.

Il n'est cependant pas possible de porter à une valeur quelconque les angles α et β car un angle β trop élevé introduirait, dans la structure carter moteur, des efforts non parallèles à l'axe moteur et il s'ensuivrait des problèmes de tenue mécanique.

Aussi, l'angle α est, de préférence, inférieur ou égal à 6°.

Dans le cas où le réacteur est monté sous voilure, les axes d'articulation des demi-capotages d'arrière-corps sont fixés à un pylône, qui est une structure carénée intégrée à la structure de ladite voilure et, dans la technique connue, les axes d'articulation sont strictement parallèles entre eux et à l'axe du pylône.

Pour réduire encore la saillie résultant de la présence des charnières déterminant ces axes d'articulation, l'invention propose en complément de l'augmentation de l'angle α et de l'inclinaison β du plan du système "V-blade/V-groove", ou en variante à ces moyens, de faire que lesdits axes d'articulation convergent l'un vers l'autre en direction aval.

L'angle de convergence, par rapport à l'axe du pylône est, de préférence, de l'ordre de 1°, les axes d'articulation faisant, par conséquent, entre eux, un angle de l'ordre de 2°.

L'invention sera mieux comprise à la lecture de la description détaillée ci-après, faite en référence aux dessins annexés dans lesquels :
- la figure 1 est une vue en perspective éclatée du système de propulsion du moteur de l'Airbus A318 (nacelle sous voilure) illustrant l'état antérieur de la technique ;
- la figure 2 est un schéma illustrant un système "V-blade/V-groove" ;
- la figure 3 représente une vue de profil, partielle, d'une nacelle sous voilure selon l'art antérieur :
- la figure 4 est une coupe de la nacelle de la figure 3, prise dans un plan vertical ;
- la figure 5 représente une vue de profil, partielle, d'une nacelle sous voilure selon l'invention :
- la figure 6 est une coupe de la nacelle de la figure 5, prise dans un plan vertical ;
- la figure 7 est un schéma représentant, en vue du dessus, le pylône et les demi-capotages d'arrière-corps avec leurs axes d'articulation ; et
- la figure 8 est une coupe schématique prise dans la zone arrière montrant l'incidence de la position des axes d'articulation sur l'importance de la saillie observée dans le carénage et résultant de la présence des charnières.

Dans la description ci-après, les mêmes références seront utilisées d'une figure à l'autre pour désigner des pièces identiques ou similaires.

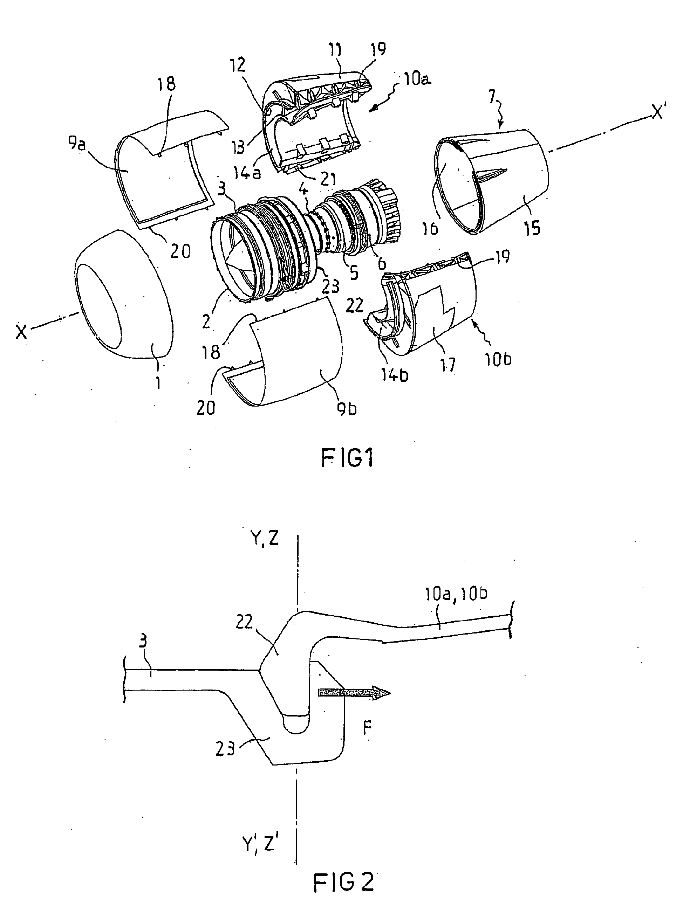

La figure 1 représente un système de propulsion selon l'art antérieur et dont on voit l'entrée d'air 1, la soufflante ou fan 2, le carter de soufflante 3, les compresseurs 4, la chambre de combustion 5, le carter turbine 6 et la tuyère d'échappement qui est une tuyère commune d'échappement (gaz chauds et froids mélangés), couramment appelée CNA, d'après la nomenclature anglaise "common nozzle assembly".

Le système comporte, en outre, un capot moteur en deux parties 9a,9b et un capotage d'arrière-corps en deux parties 10a,10b adapté à entourer l'ensemble formé par les compresseurs 4, la chambre de combustion 5 et le carter turbine 6, la division en deux parties du capot moteur et du capotage d'arrière-corps étant faite selon un plan de coupe sensiblement vertical. Chaque demi-capotage d'arrière-corps 10a,10b, couramment appelé D-duct, présente trois surfaces aérodynamiques ou peaux, à savoir une surface extérieure de nacelle 11, une surface extérieure de canal de soufflante 12 et une surface intérieure de canal de soufflante 13. Les surfaces 12 et 13 délimitent un demi-canal de soufflante (flux froid), respectivement, 14a et 14b. De son côté, la CNA 7 qui, en fonctionnement normal, est connectée sur les demi-capotages d'arrière-corps, comporte deux surfaces aérodynamiques, à savoir la surface extérieure de nacelle 15 et la surface intérieure de canal de flux chaud et froid mélangés 16. Des portes d'inverseur de poussée 17 sont implantées dans le capotage 10a,10b pour agir sur le flux froid.

Le capot moteur et le capotage d'arrière-corps sont formés chacun de deux moitiés, respectivement 9a,9b et 10a, 10b, mais la tuyère commune ou CNA 7 est d'une seule pièce. Les demi-capots 9a,9b et les demi-capotages 10a,10b sont montés articulés sur la poutre moteur (non représentée) au moyen de charnières, respectivement 18 et 19. A l'opposé des charnières, les demi-capots 9a,9b et les demi-capotages 10a,10b comportent des verrous tels que 20 et 21 permettant de les verrouiller en position fermée. Il est bien entendu que ce montage en deux parties articulées a pour but de permettre un accès plus facile aux parties froides et chaudes du réacteur.

Le capotage d'arrière-corps 10a,10b est solidarisé au moteur au moyen de structures dites "V-blade/V-groove" dont la position sur l'extrémité amont du demi-capotage 10b est indiquée en 22, pour connexion sur le carter de soufflante 3. Des structures complémentaires, telles que 23 (figure 2) sont positionnées en vis-à-vis sur ledit carter.

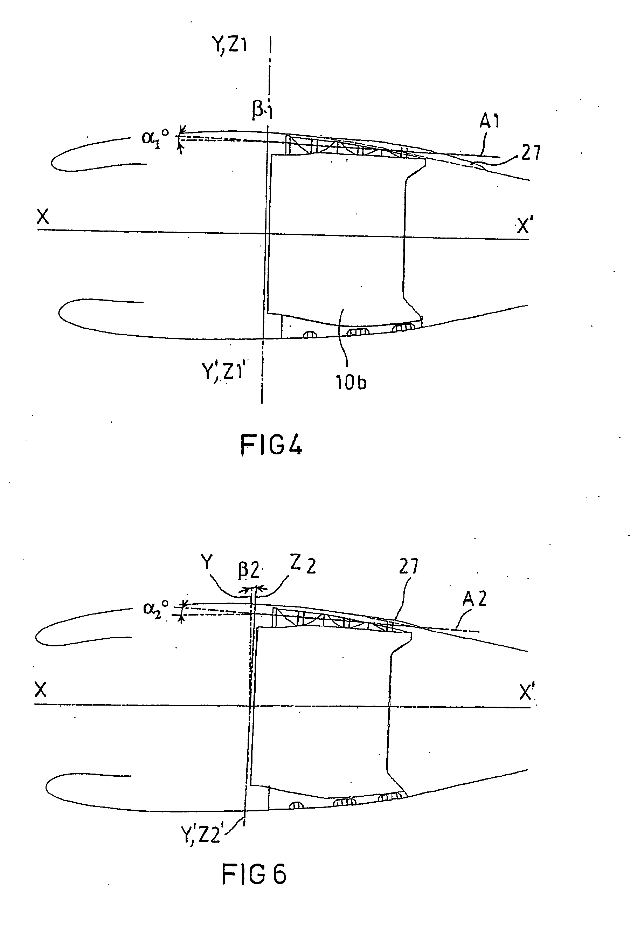

Le plan de jonction Z-Z' (Z₁-Z₁' à la figure 4) du système "V-blade/V-groove" se confond avec un plan Y-Y' perpendiculaire à l'axe X-X' du moteur de sorte que l'angle β₁ (figure 4) entre les deux plans est nul.

Un système "V-blade/V-groove" similaire est prévu entre le bord aval des demi-capotages 10a,10b et le bord amont de la CNA 7 et, dans ce cas également, le plan de jonction du système "V-blade/V-groove" se confond avec un plan perpendiculaire à l'axe X-X' du moteur.

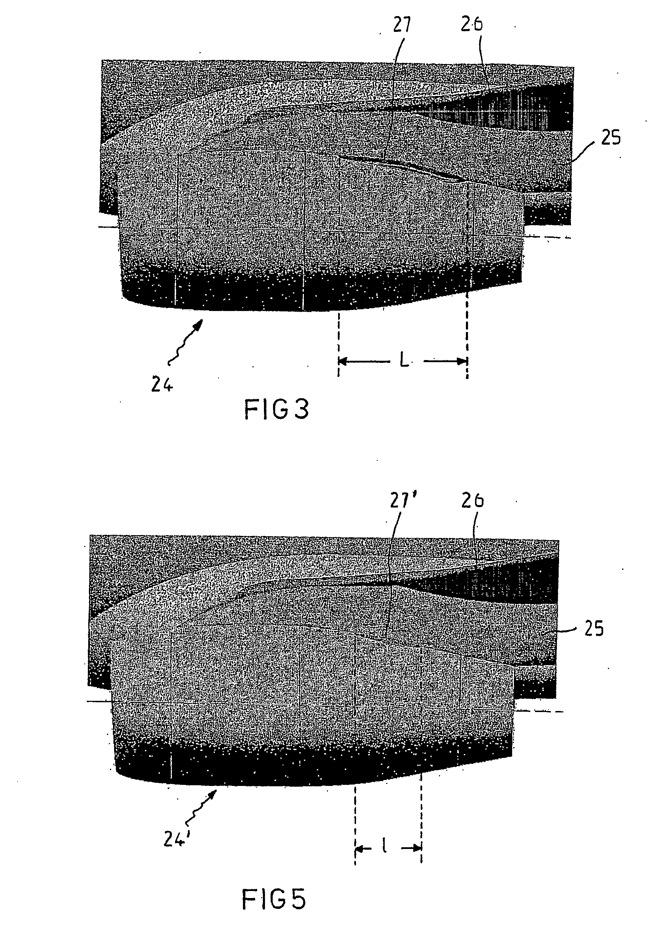

La figure 3 montre une nacelle 24 montée sur un pylône 25 dépendant de la voilure 26 d'un aéronef. Comme on le voit, une zone, indiquée en 27, de longueur L, fait saillie par rapport au profil général de la nacelle 24. Cela est dû à la présence du carénage des charnières 19, lesquelles sont disposées selon un axe d'articulation A1 (figure 4) qui fait un angle α₁ ≤ 3° avec l'axe X-X' du moteur.

Selon l'invention, cet angle est porté à α₂ > 3, de sorte que l'axe d'articulation occupe maintenant la position A₂ et, simultanément, il est donné un angle β₂ au plan de jonction du système "V-blade/V-groove", devenu ainsi Z₂-Z₂', par rapport au plan Y-Y' .

Cet angle β₂ est tel que α₂ - β₂ ≤ 3.

Comme il ressort des figures 5 et 6, il en résulte une réduction très significative de la saillie, devenue 27', tant sur le plan de la longueur qui passe de L à 1, que de la hauteur.

Il est bien entendu que le plan de jonction du système "V-blade/V-groove" entre le bord aval des demi-capotages d'arrière-corps 10a,10b et le bord amont de la CNA 7 doit, selon l'invention, être incliné d'un angle β₂, par rapport au plan perpendiculaire à l'axe X-X' du moteur, comme l'est le plan de jonction du système "V-blade/V-groove" entre le bord amont des demi-capotages 10a,10b et le bord aval du carter de soufflante 3.

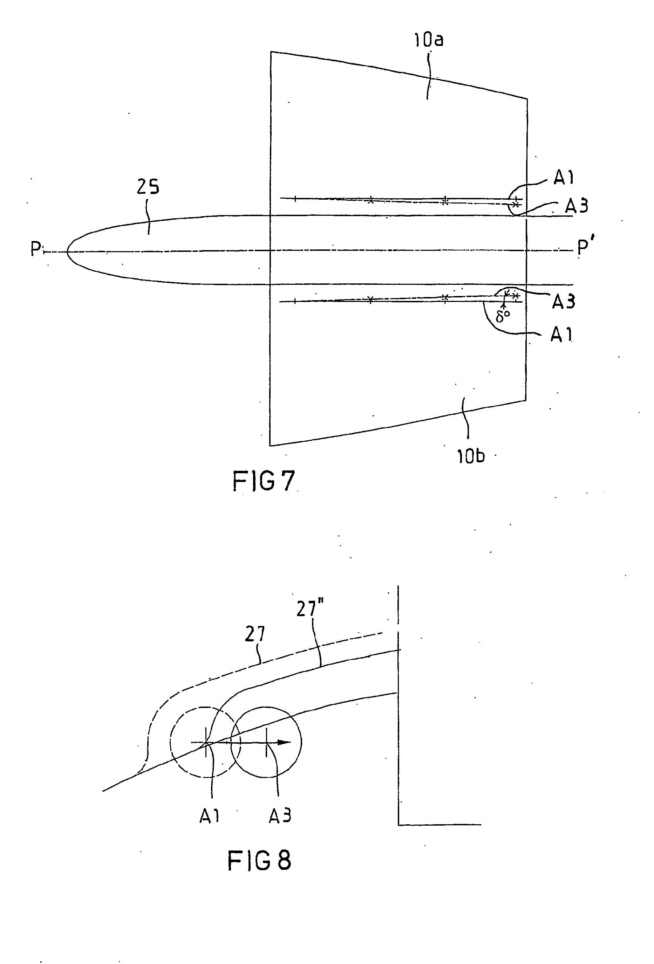

La saillie peut encore être réduite en ayant recours à une autre mesure illustrée aux figures 7 et 8.

La figure 7 montre schématiquement le pylône 25 et les deux demi-capotages d'arrière-corps 10a,10b avec leurs axes d'articulation.

Selon l'art antérieur, les axes d'articulation occupent la position Al, c'est-à-dire qu'ils sont parallèles entre eux et parallèles à l'axe longitudinal P-P' du pylône 25. A cette position correspond la saillie illustrée en 27 aux figures 3, 4 et 8.

Cependant, si l'on fait légèrement converger ces axes vers l'arrière ou aval, selon un angle δ, par rapport à l'axe P-P', en les amenant en A₃, on observe une nette réduction de la taille de la saillie, illustrée en 27" à la figure 8.

La combinaison des deux types de mesures (plus grande inclinaison des axes d'articulation par rapport à l'axe moteur avec inclinaison appropriée du plan de jonction du système "V-blade/V-groove", d'une part, et convergence des axes d'articulation par rapport à l'axe du pylône, d'autre part) permet donc d'obtenir une réduction tout à fait substantielle de la taille de la saillie, ce qui est bénéfique sur le plan de la définition aérodynamique de la zone nacelle/pylône/voilure.

Bien que l'invention ait été plus particulièrement décrite à propos d'une nacelle longue à flux mélangés, il est bien entendu qu'elle est tout aussi applicable à une nacelle courte à flux séparés. De même, bien que l'invention ait été illustrée appliquée à une configuration "moteur sous voilure", elle est applicable à une configuration dite "moteur en latéral fuselage". Il convient également de noter que l'invention est applicable aussi bien à des arrière-corps incorporant des portes d'inverseur de poussée, comme cela a été décrit à propos de la figure 1, qu'à des arrière-corps dépourvus de telles portes.

## Revendications

1. Groupe turbopropulseur pour aéronef comprenant notamment, de l'amont à l'aval par référence au sens d'écoulement des gaz, un réacteur pourvu d'un carter de soufflante (3) et un système d'éjection des gaz, coaxiaux à un axe moteur (X-X'), ledit système d'éjection des gaz incluant deux demi-capotages d'arrière-corps (10a,10b) articulés chacun autour d'un axe, ce qui leur permet de passer d'une position ouverte de maintenance, à une position fermée dans laquelle lesdits demi-capotages d'arrière-corps (10a,10b) viennent, en outre, se relier à l'extrémité aval dudit carter de soufflante (3) via un moyen d'étanchéité et de transmission d'efforts (21,23), dit "V-blade/V-groove", lesdits axes d'articulation faisant un angle α avec l'axe moteur, **caractérisé en ce que** cet angle α est supérieur à 3° et **en ce que** le plan de jonction (Z₂-Z₂') entre lesdits demi-capotages d'arrière-corps et ladite extrémité aval dudit carter de soufflante (3) fait, avec le plan perpendiculaire à l'axe moteur (X-X'), un angle β tel que la différence entre l'angle α et l'angle β est inférieure ou égale à 3°.

2. Groupe turbopropulseur selon la revendication 1, **caractérisé en ce que** l'angle α est inférieur ou égal à 6°.

3. Groupe turbopropulseur selon la revendication 1 ou 2, monté sous voilure, dans lequel lesdits axes d'articulation sont fixés à un pylône (25) intégré à la structure de ladite voilure (26), **caractérisé en ce que** lesdits axes d'articulation (A2) convergent vers l'un vers l'autre en direction de l'aval.

4. Groupe turbopropulseur pour aéronef comprenant notamment, de l'amont à l'aval par référence au sens d'écoulement des gaz, un réacteur pourvu .d'un carter de soufflante (3) et un système d'éjection des gaz, coaxiaux à un axe moteur (X-X'), ledit système d'éjection des gaz incluant deux demi-capotages d'arrière-corps (10a,10b) articulés chacun autour d'un axe, ce qui leur permet de passer d'une position ouverte de maintenance, à une position fermée dans laquelle lesdits demi-capotages d'arrière-corps (10a,10b) viennent, en outre, se relier à l'extrémité aval dudit carter de soufflante (3) via un moyen d'étanchéité et de transmission d'efforts (21,23), dit "V-blade/V-groove", lesdits axes d'articulation étant fixés à un pylône (25) intégré à la structure de ladite voilure (26), **caractérisé en ce que** lesdits axes d'articulation (A₃) convergent l'un vers l'autre en direction de l'aval.

5. Groupe turbopropulseur selon la revendication 3 ou 4, **caractérisé en ce que** l'angle de convergence (δ), par rapport à l'axe du pylône, est de l'ordre de 1°.

## Claims

1. A turboprop unit for an aircraft, comprising in particular, from upstream to downstream with respect to the direction of gas flow, a jet engine having a fan casing (3) and a gas exhaust system, these being coaxial with an engine axis (X-X'), the said gas exhaust system including two afterbody half-cowlings (10a, 10b), each hinged about an axis, enabling them to move from an open maintenance position to a closed position in which the said afterbody half-cowlings (10a, 10b) are also connected to the downstream end of the said fan casing (3) via a means (21, 23) for sealing and strain transmission, called a "V-blade/V-groove" system, the said hinge axes forming an angle α with the engine axis, **characterized in that** this angle α is greater than 3 ° and **in that** the joint plane (Z₂-Z₂') between the said afterbody half-cowlings and the said downstream end of the said fan casing (3) forms an angle β with the plane perpendicular to the engine axis (X-X') such that the difference between the angle α and the angle β is less than or equal to 3°.

2. The turboprop unit as claimed in claim 1, **characterized in that** the angle α is less than or equal to 6°.

3. The turboprop unit as claimed in claim 1 or 2, mounted under a wing, in which the said hinge axes are fixed to a pylon (25) integrated in the structure of the said wing (26), **characterized in that** the said hinge axes (A₂) converge towards each other in the downstream direction.

4. The turboprop unit for an aircraft, comprising in particular, from upstream to downstream with respect to the direction of gas flow, a jet engine provided with a fan casing (3) and a gas exhaust system, these being coaxial with an engine axis (X-X'), the said gas exhaust system including two afterbody half-cowlings (10a, 10b), each hinged about an axis, enabling them to move from an open maintenance position to a closed position in which the said afterbody half-cowlings (10a, 10b) are also connected to the downstream end of the said fan casing (3) via a means (21, 23) for sealing and strain transmission, called a "V-blade/V-groove" system, the said hinge axes being fixed to a pylon (25) integrated in the structure of the said wing (26), **characterized in that** the said hinge axes (A₃) converge towards each other in the downstream direction.

5. The turboprop unit as claimed in claim 3 or 4, **characterized in that** the angle of convergence (δ) with respect to the axis of the pylon is about 1°.

## Patentansprüche

1. Turboprop-Triebwerk für Luftfahrzeug, umfassend insbesondere, von stromauf nach stromab bezüglich der Strömungsrichtung der Gase, ein Strahltriebwerk, das mit einem Gebläsegehäuse (3) versehen ist, und ein Gasausstoßsystem, die zu einer Motorachse (X-X') koaxial sind, wobei das Gasausstoßsystem zwei Heckverkleidungshälften (10a, 10b) einschließt, die jeweils um eine Achse angelenkt sind, was ihnen gestattet, von einer offenen Wartungsstellung in eine geschlossene Stellung überzugehen, in der die Heckverkleidungshälften (10a, 10b) außerdem mit dem stromab gelegenen Ende des Gebläsegehäuses (3) über ein Dichtungs- und Kraftübertragungsmittel (21, 23), "V-blade/V-groove" genannt, verbunden sind, wobei die Gelenkachse mit der Motorachse einen Winkel α bilden, **dadurch gekennzeichnet, dass** dieser Winkel α größer als 3° ist und dass die Trennebene (Z₂-Z₂') zwischen den Heckverkleidungshälften und dem stromab gelegenen Ende des Gebläsegehäuses (3) mit der zur Motorachse (X-X') senkrechten Ebene einen solchen Winkel β bildet, dass die Differenz zwischen dem Winkel α und dem Winkel β kleiner als oder gleich 3° ist.

2. Turboprop-Triebwerk nach Anspruch 1, **dadurch gekennzeichnet, dass** der Winkel α kleiner als oder gleich 6° ist.

3. Turboprop-Triebwerk nach Anspruch 1 oder 2, das unter dem Tragwerk montiert ist und bei dem die Gelenkachsen an einer in die Struktur des Tragwerks (26) integrierten Stütze (25) befestigt sind, **dadurch gekennzeichnet, dass** die Gelenkachsen (A2) in Richtung stromab aufeinander zu konvergieren.

4. Turboprop-Triebwerk für Luftfahrzeug, umfassend insbesondere, von stromauf nach stromab bezüglich der Strömungsrichtung der Gase, ein Strahltriebwerk, das mit einem Gebläsegehäuse (3) versehen ist, und ein Gasausstoßsystem, die zu einer Motorachse (X-X') koaxial sind, wobei dieses Gasausstoßsystem zwei Heckverkleidungshälften (10a, 10b) einschließt, die jeweils um eine Achse angelenkt sind, was ihnen gestattet, von einer offenen Wartungsstellung in eine geschlossene Stellung überzugehen, in der die Heckverkleidungshälften (10a, 10b) außerdem mit dem stromab gelegenen Ende des Gebläsegehäuses (3) über ein Dichtungs- und Kraftübertragungsmittel (21, 23), "V-blade/V-groove" genannt, verbunden sind, wobei die Gelenkachsen an einer in die Struktur des Tragwerks (26) integrierten Stütze (25) befestigt sind, **dadurch gekennzeichnet, dass** die Gelenkachsen (A₃) in Richtung stromab aufeinander zu konvergieren

5. Turboprop-Triebwerk nach Anspruch 3 oder 4, **dadurch gekennzeichnet, dass** der Konvergenzwinkel (δ) bezüglich der Achse der Stütze etwa 1° beträgt.
